# EUROPEAN PATENT APPLICATION

(11) **EP 3 179 429 A1**
(43) Date of publication of application: **14.06.2017**
(21) Application number: 16201616.6
(22) Date of filing: 01.12.2016
(51) Int. Cl.: G06Q 20/32, G06Q 20/38, G07F 19/00, G06Q 40/04

(54) **METHOD OF EXCHANGING CURRENCIES USING AN OFFLINE POINT OF SALE THIRD PARTY PAYMENT SYSTEM AND INTERNET-CONNECTED MOBILE COMPUTING DEVICE**

(30) Priority: 07.12.2015 US 201562264274 P; 18.12.2015 US 201514973743
(71) Applicant: Leadot Innovation, Inc., 802 Kaohsiung (TW)
(72) Inventor: Wang, Justin, 106 Taipei City (TW)
(74) Representative: Becker Kurig Straus

(57) **Abstract**

A point of sale exchange machine is able to exchange a number of different first types of credit or currency for any one of a number of different second types of credit or currency in conjunction with a mobile computing device having an internet connection. Furthermore, the point of sale exchange machine does not need to have an internet connection in order to function. Thus, the point of sale exchange machine can easily be positioned in a variety of different locations and can have a low operating cost due to its lack of an internet connection.

## Description

### Field of the Invention

The invention relates to a currency exchange method, and more particularly, to a method of exchanging currencies using an offline point of sale third party payment system and an internet-connected mobile computing device.

### Background of the Invention

Currently change machines are limited in their functions. Typically change machines, also known as bill changers, are seen wherever tokens or coins are needed for operating equipment, and where the equipment is not able to accept paper currency, also known as bank notes or bills. Examples of equipment that would benefit from having a change machine located nearby include coin-operated laundry facilities, vending machines, parking meters, or video game arcades. Change machines allow a user to exchange bills for coins or tokens that can be used in the equipment, thereby allowing users that do not initially have the required coins or tokens to still be able to use the equipment.

However, change machines are usually limited to exchanging bills of a single first currency type for coins or tokens of single second currency type. In addition, the user often must have bills of the first currency type on hand in order to make the exchange. Thus, the usefulness of the change machines is limited due to their inability to accept other first currency types.

### Summary of the Invention

It is therefore one of the primary objectives of the claimed invention to provide a method of exchanging a first type of currency for a second type of currency using a point of sale exchange machine and a mobile computing device.

According to an exemplary embodiment of the claimed invention, a method of exchanging a first type of currency for a second type of currency using a point of sale exchange machine and a mobile computing device is disclosed. The method includes indicating through the point of sale exchange machine an amount of the first type of currency that a user wishes to exchange; the point of sale exchange machine generating an exchange code corresponding to the indicated amount of the first type of currency that the user wishes to exchange, and displaying the exchange code on a display of the point of sale exchange machine; executing an application program (app) on the mobile computing device, the app corresponding to a payment system that provides access to the first type of currency; the user entering the exchange code into the app; the app establishing a connection with a point of sale exchange machine company server that is operated by a company operating the point of sale exchange machine, and the app sending data contained in the exchange code along with payment information and payee information to the point of sale exchange machine company server; in response to the point of sale exchange machine company server receiving the data contained in the exchange code along with payment information and payee information, the point of sale exchange machine company server instructing the payment system that provides access to the first type of currency to deduct the indicated amount of the first type of currency from a user's account with the payment system that provides access to the first type of currency and to transfer the indicated amount of the first type of currency into an account owned by the company operating the point of sale exchange machine; the point of sale exchange machine company server transmitting an authorization code to the app; the user receiving the authorization code from the app and entering the authorization code into the point of sale exchange machine; and in response to receiving the authorization code, the point of sale exchange machine releasing the second type of currency to the user when the point of sale exchange machine determines that the authorization code is approved.

It is an advantage that the present invention provides a way to access a variety of different currencies, virtual currencies, or third-party payment system currencies for use as the first type of currency that is exchanged for the second type of currency. Furthermore, the point of sale exchange machine does not need to have an internet connection in order to function. The internet connection of the mobile computing device is enough to allow the exchange to take place. Thus, the point of sale exchange machine can easily be positioned in a variety of different locations and can have a low operating cost due to its lack of an internet connection.

### Brief Description of the Drawings

In the following, the invention is further illustrated by way of example, taking reference to the following drawings. Thereof:
Fig. 1 is a functional block diagram of a mobile computing device that is used for executing an application (app) used for accessing a user's first type of credit or currency,
Fig. 2 is a functional block diagram of a point of sale exchange machine that is used for facilitating the exchange of the first type of currency into the second type of currency,
Fig. 3 is a functional block diagram showing interaction between the mobile computing device, a point of sale exchange machine company server, and an app company server,
Fig. 4 illustrates a front-left view of the point of sale exchange machine according to a first embodiment the present invention,
Fig. 5 illustrates a front-right view of the point of sale exchange machine according to the first embodiment the present invention,
Fig. 6 illustrates a front view of a top half of the point of sale exchange machine according to the first embodiment of the present invention,
Fig. 7 illustrates a front view of the point of sale exchange machine according to the first embodiment the present invention,
Fig. 8 illustrates a front view of a top portion of the point of sale exchange machine without an outer cover on the point of sale exchange machine according to the first embodiment of the present invention,
Fig. 9 illustrates an initial screen shown on the display of the point of sale exchange machine before a user selects how much money to exchange,
Fig. 10 illustrates a second screen shown on the display of the point of sale exchange machine after the user selects how much money to exchange, and
Fig. 11 is a flowchart describing the method of converting the first type of currency into the second type of currency using the mobile computing device, the point of sale exchange machine, the point of sale exchange machine company server, and the app company server.

### Detailed Description

The present invention seeks to improve upon the traditional change machine by providing a point of sale exchange machine that is able to exchange a number of different first types of credit or currency for one or more different second types of credit or currency.

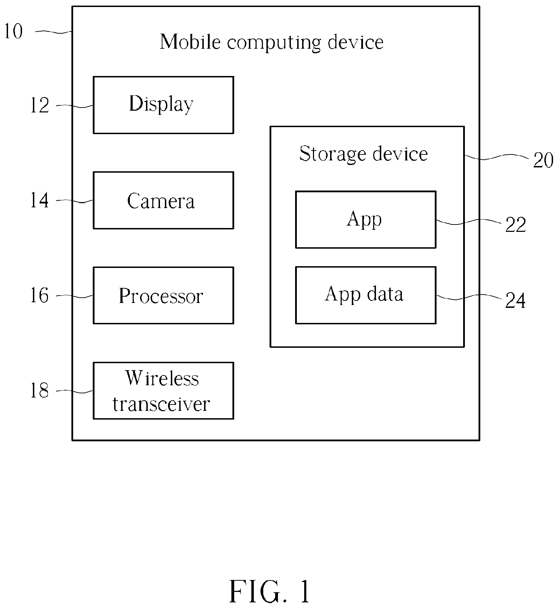

Fig. 1 is a functional block diagram of a mobile computing device 10 that is used for executing an application (app) 22 used for accessing a user's first type of credit or currency. Examples of this first type of credit or currency include third party payment systems such as PayPal®, Bitcoin, Alibaba e-Credit, Amazon gift credit, video game virtual currency, airline miles, department store points, supermarket points, and other similar forms of currency, points, or credit. The app 22 would allow the user to access the user's stored currency, points, or credit that corresponds to that app. For example, if the app 22 is a PayPal® app, then the app 22 would allow the user to access the user's stored PayPal® credit. In the following description, the term "first type of currency" will be used to describe any of these stored first types of currency, points, or credit that the user is exchanging for "a second type of currency". The second type of currency may also include several different forms, such as cash, tokens, or other form of credit such as gaming credit on gaming machines.

The mobile computing device 10 comprises a display 12 that is preferably a touchscreen, a camera 14, a processor 16 for controlling operation of the mobile computing device 10, and a wireless transceiver 18 such as a Wireless Fidelity (Wi-Fi) transceiver or a mobile internet transceiver such as a third generation of mobile telecommunications technology (3G) transceiver or a fourth generation of mobile telecommunications technology (4G) transceiver. The mobile computing device 10 also comprises a storage device 20. The storage device 20 stores the app 22 as well as app data 24 that is used in conjunction with the app 22. The storage device 20 is preferably a non-volatile memory such as flash memory. The mobile computing device 10 may be any mobile device having a display, an input device, and some sort of internet connection, such as a tablet computer or a smartphone, but other devices such as a notebook computer can be used as well.

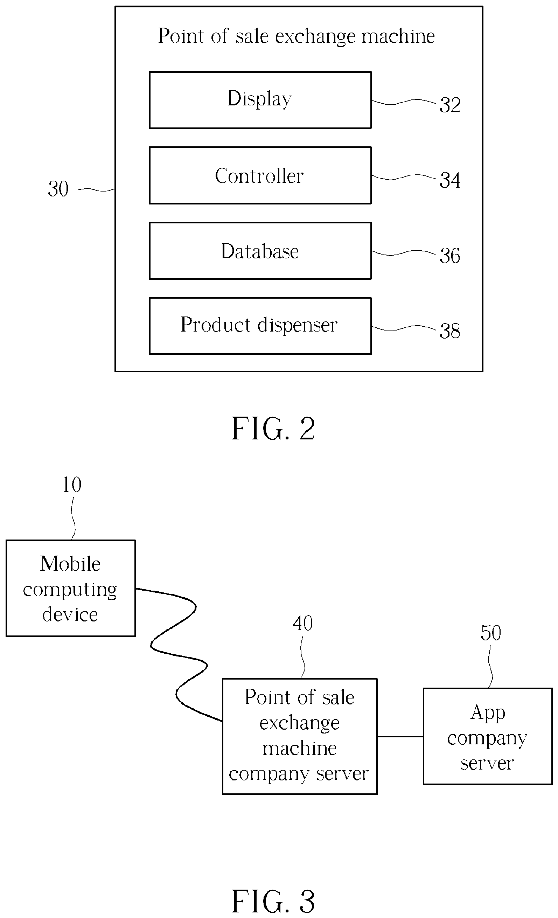

Fig. 2 is a functional block diagram of a point of sale exchange machine 30 that is used for facilitating the exchange of the first type of currency into the second type of currency. The point of sale exchange machine 30 comprises a display 32 that is preferably a touchscreen, a controller 34 for controlling operation of the point of sale exchange machine 30, a database 36 stored in non-volatile memory for storing exchange-related data, and a product dispenser 38 for dispensing coins, tokens, tickets, vouchers, purchased products, or other items from the point of sale exchange machine 30. The product dispenser 38 may be optional if the point of sale exchange machine 30 does not actually dispense any items, and instead only exchanges the first type of currency into the second type of currency that is stored instead of being dispensed from the point of sale exchange machine 30. An example of this stored second type of currency includes gaming credit that can be added to a user's account, this gaming credit to be spent on gaming machines such as video game machines or slot machines.

Fig. 3 is a functional block diagram showing interaction between the mobile computing device 10, a point of sale exchange machine company server 40, and an app company server 50. During the process of exchanging the first type of currency into the second type of currency, the mobile computing device 10 will establish a connection to the point of sale exchange machine company server 40, which is a server operated by the company operating the point of sale exchange machine 30. This connection between the mobile computing device 10 and the point of sale exchange machine company server 40 is preferably made via the internet, and the mobile computing device 10 connects to the internet via the wireless transceiver 18. The point of sale exchange machine company server 40 also establishes a connection to the app company server 50, and this connection is also preferably made via the internet. The interaction between the mobile computing device 10, the point of sale exchange machine company server 40, and the app company server 50 will be described in greater detail below.

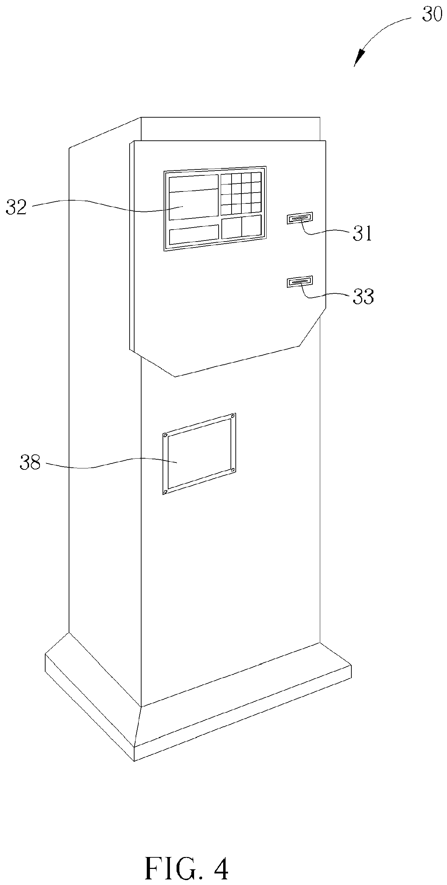

Fig. 4 illustrates a front-left view of the point of sale exchange machine 30 according to a first embodiment the present invention. The display 32 of the point of sale exchange machine 30 is shown near the center of the top portion of a front side of the point of sale exchange machine 30, and the product dispenser 38 is near the left-center of the front side of the point of sale exchange machine 30. Two bill receiver slots 31 and 33 are shown to the right and to the lower-right sides of the display 32, and these bill receiver slots 31 and 33 can be used to accept bills (paper currency) from the user. Having two different bill receiver slots 31 and 33 allows different sized bills of a same currency to be accepted, or allows bills of different types of currencies to be accepted. These bills would be the first type of currency that could then be exchanged for the second type of currency. Implementing bill receiver slots on a change machine is well known in the art, and the focus of the present invention is not on exchanging bills for another form of currency, so these two bill receiver slots 31 and 33 are not described in further detail. It should be noted that the relative locations of the display 32, the bill receiver slots 31 and 33, and the product dispenser 38 shown in Fig. 4 through Fig. 8 are provided as an example only, and the locations can be moved in order to ensure functionality of the point of sale exchange machine 30.

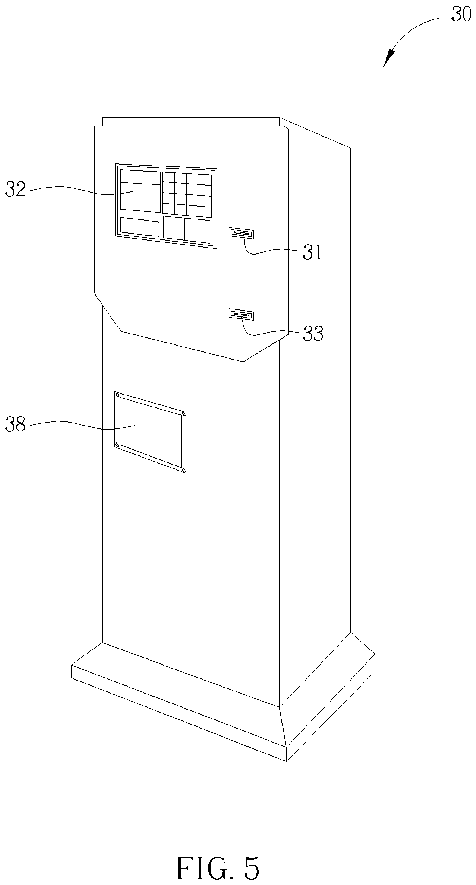

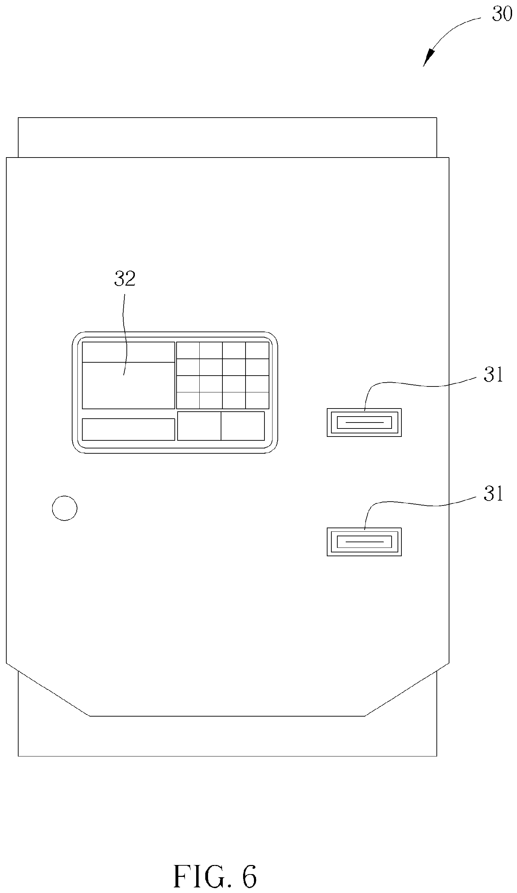

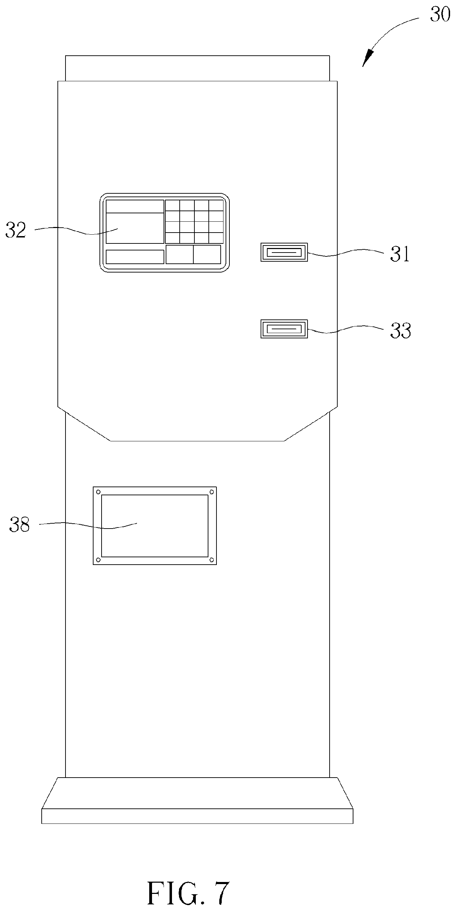

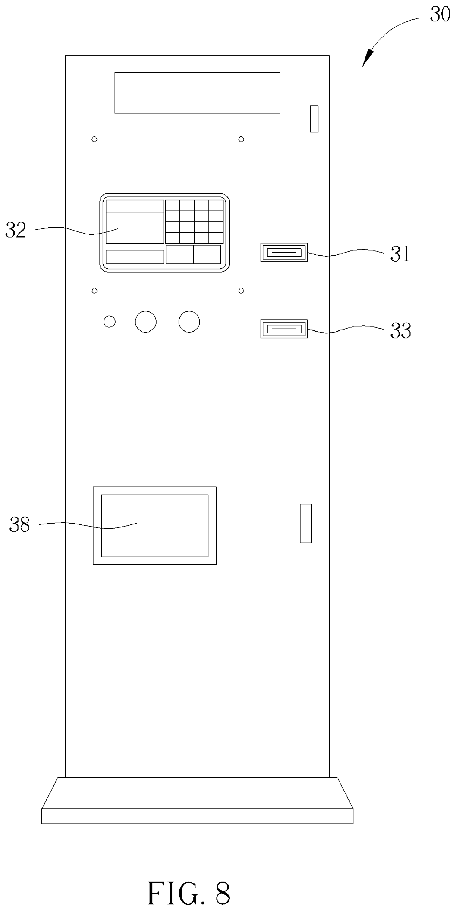

Fig. 5 illustrates a front-right view of the point of sale exchange machine 30 according to the first embodiment the present invention. Fig. 6 illustrates a front view of a top half of the point of sale exchange machine 30 according to the first embodiment of the present invention. Fig. 7 illustrates a front view of the point of sale exchange machine 30 according to the first embodiment the present invention. Fig. 8 illustrates a front view of a top portion of the point of sale exchange machine 30 without an outer cover on the point of sale exchange machine 30 according to the first embodiment of the present invention.

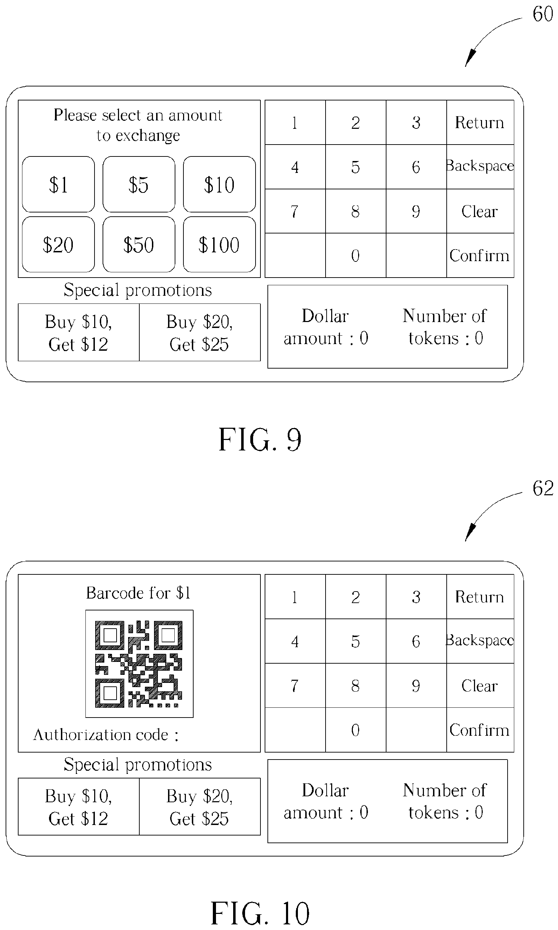

Fig. 9 illustrates an initial screen 60 shown on the display 32 of the point of sale exchange machine 30 before a user selects how much money to exchange. The initial screen 60 in Fig. 9 can be divided into a left half and a right half. The top of the left half of the initial screen 60 prompts a user to select a dollar amount that the user wishes to exchange. In the middle of the left half of the initial screen 60, the user is given choices of different dollar amounts, such as $1, $5, $10, $20, $50, and $100. The bottom of the left half of the initial screen 60 informs the user of any current promotions that the user can take advantage of, such as "buy $10 worth of credit, and get $12 worth of credit for free" or "buy $20 worth of credit, and get $25 worth of credit for free". The right half of the initial screen 60 contains a number pad as well as function buttons on the far right side. These function buttons comprise a "return" function, a "backspace" function, a "clear" function, and a "confirm" function. The bottom side of the right half of the initial screen 60 contains an indication of the dollar amount or an indication of the number of tokens that the point of sale exchange machine 30 will dispense as soon as either of these amounts has been determined. If the user does not wish to use one of the predefined dollar amounts shown on the left half of the initial screen 60, the user can optionally type in a different dollar amount using the number pad on the right half of the initial screen 60.

In this example, assume that after the user is presented with the initial screen 60, the user makes a selection on the left half of the initial screen 60 to exchange a dollar amount of $1. The user presses the button corresponding to $1, and then a screen illustrated in Fig. 10 is shown. Please refer to Fig. 10. Fig. 10 illustrates a second screen 62 shown on the display 32 of the point of sale exchange machine 30 after the user selects how much money to exchange.

Like the initial screen 60 in Fig. 9, the second screen 62 in Fig. 10 can also be divided into a left half and a right half. The top of the left half of the second screen 62 gives the user a message that a bar code (in this case a two-dimensional bar code such as a QR code) corresponding to the dollar amount of $1 is shown, and the two-dimensional bar code is displayed immediately below this. The data contained in the two-dimensional bar code is preferably encrypted to prevent users from easily deciphering the contents of the two-dimensional bar code. Right below the two-dimensional bar code the user is prompted to enter an authorization code, as will be explained below. The bottom of the left half of the second screen 62 is the same as that in the initial screen 60 of Fig. 9. The right half of the second screen 62 is also the same as that in the initial screen 60 of Fig. 9.

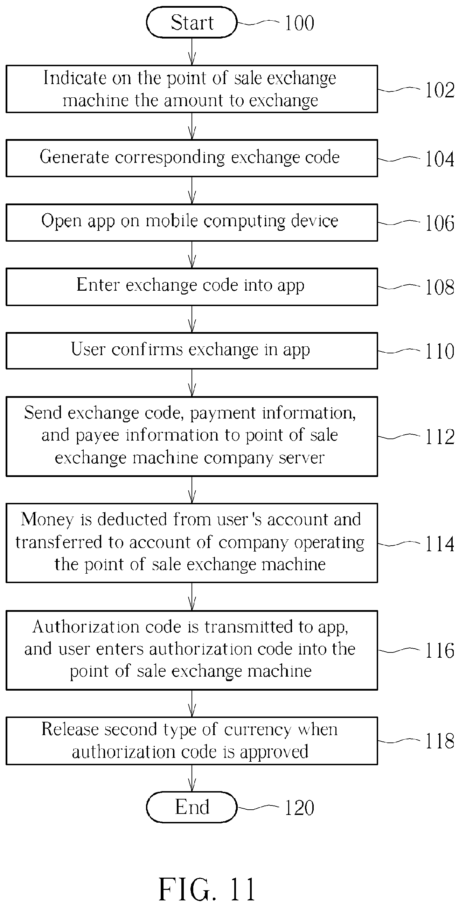

Fig. 11 is a flowchart describing the method of converting the first type of currency into the second type of currency using the mobile computing device 10, the point of sale exchange machine 30, the point of sale exchange machine company server 40, and the app company server 50. Steps in the flowchart will be explained as follows.

### Step 100: Start.

Step 102: Using the point of sale exchange machine 30, the user indicates through the initial screen 60 shown in Fig. 9 what dollar amount the user wishes to exchange.

Step 104: In response to receiving a dollar amount selection from the user in step 102, the point of sale exchange machine 30 generates an exchange code corresponding to the selected dollar amount, and this exchange code is shown on the display 32 of the point of sale exchange machine 30. The exchange code can be a one-dimensional bar code, a two-dimensional bar code such as what is shown in the second screen 62 shown in Fig. 10, an alphanumeric code, or other types of codes. The exchange code can also optionally be encrypted to better protect the data contained therein.

Step 106: The user opens the app 22 on the user's mobile computing device 10. The app 22 allows the user to access the first type of currency that the user wishes to exchange for the second type of currency.

Step 108: The user scans the exchange code using the app 22 and the camera 14 of the mobile computing device 10. In some embodiments, the user may also manually enter the exchange code into the app 22 using a keyboard of the mobile computing device 10. The app 22 can then read the contents of the exchange code.

Step 110: The app 22 prompts the user to confirm that the user wishes to exchange the first type of currency. Upon receiving the user's confirmation, step 112 is executed.

Step 112: The app 22 running on the mobile computing device 10 will establish a connection with the point of sale exchange machine company server 40, which is operated by the company operating the point of sale exchange machine 30. The app 22 will send the data contained in the exchange code to the point of sale exchange machine company server 40, and the app 22 will also send payment information and payee information to the point of sale exchange machine company server 40.

Step 114: If the exchange code was encrypted, the point of sale exchange machine company server 40 will decrypt the data contained in the exchange code, and will receive the payment information and payee information from the app 22. The point of sale exchange machine company server 40 will then communicate with the app company server 50. The app company server 50 then deducts money from the user's account of the first type of currency with the app company, and transfers this money into an account owned by the company operating the point of sale exchange machine 30 and the point of sale exchange machine company server 40.

Step 116: The point of sale exchange machine company server 40 transmits an authorization code to the app company server 50, and the app company server 50 in turn sends this confirmation code to the user using the app 22 running on the mobile computing device 10. In another embodiment, the point of sale exchange machine company server 40 can transmit the authorization code directly to the app 22. Upon receiving this authorization code through the app 22, the user then enters the authorization code into the second screen 62 shown in Fig. 10. For enhanced security, the point of sale exchange machine 30 can give the user a time limit in which the user must enter the authorization code within a predetermined period of time, and this authorization code can also be a one-time use code to prevent fraud. The authorization code can be an alphanumeric code, can be a one dimensional or two-dimensional bar code if the point of sale exchange machine 30 has a camera that can scan the display 12 of the mobile computing device 10, can be the user's biometric data, or can be other types of authorization codes. Please note that these processes shown in Step 116 are only necessary if the point of sale exchange machine 30 is offline and does not have an active internet connection. If the point of sale exchange machine 30 is online and has internet access, then step 116 can be skipped if the point of sale exchange machine company server 40 communicates directly with the point of sale exchange machine 30.

Step 118: Upon receiving the authorization code, the point of sale exchange machine 30 compares this authorization code with codes contained in the database 36, and when the authorization code is approved, the point of sale exchange machine 30 releases cash money, tokens, products, or other forms of the second type of currency. A wide variety of currencies can be used as either of the first type of currency and the second type of currency, making the point of sale exchange machine 30 a versatile exchange machine.

### Step 120: End.

The present invention provides a way for the point of sale exchange machine 30 to function without needing an active internet connection. The database 36 of the point of sale exchange machine 30 can be updated periodically, such as once a day, once a week, or on an as-needed basis. When the database 36 is updated, new authorization codes can be added to the database 36 as well as the information corresponding to new users that have registered with the company operating the point of sale exchange machine 30 and the point of sale exchange machine company server 40.

In summary, the present invention provides a way to access a variety of different currencies, virtual currencies, or third-party payment system currencies for use as the first type of currency that is exchanged for the second type of currency. Furthermore, the point of sale exchange machine does not need to have an internet connection in order to function. The internet connection of the mobile computing device is enough to allow the exchange to take place. Thus, the point of sale exchange machine can easily be positioned in a variety of different locations and can have a low operating cost due to its lack of an internet connection.

## Claims

1. A method of exchanging a first type of currency for a second type of currency using a point of sale exchange machine and a mobile computing device, the method **characterized by**:
indicating through the point of sale exchange machine an amount of the first type of currency that a user wishes to exchange;
the point of sale exchange machine generating an exchange code corresponding to the indicated amount of the first type of currency that the user wishes to exchange, and displaying the exchange code on a display of the point of sale exchange machine;
executing an application program (app) on the mobile computing device, the app corresponding to a payment system that provides access to the first type of currency;
the user entering the exchange code into the app;
the app establishing a connection with a point of sale exchange machine company server that is operated by a company operating the point of sale exchange machine, and the app sending data contained in the exchange code along with payment information and payee information to the point of sale exchange machine company server;
in response to the point of sale exchange machine company server receiving the data contained in the exchange code along with payment information and payee information, the point of sale exchange machine company server instructing the payment system that provides access to the first type of currency to deduct the indicated amount of the first type of currency from a user's account with the payment system that provides access to the first type of currency and to transfer the indicated amount of the first type of currency into an account owned by the company operating the point of sale exchange machine;
the point of sale exchange machine company server transmitting an authorization code to the app;
the user receiving the authorization code from the app and entering the authorization code into the point of sale exchange machine; and
in response to receiving the authorization code, the point of sale exchange machine releasing the second type of currency to the user when the point of sale exchange machine determines that the authorization code is approved.

2. The method of claim 1, further **characterized in that** the exchange code is a one-dimensional bar code or a two-dimensional bar code.

3. The method of claim 1, further **characterized in that** the exchange code is an alphanumeric code.

4. The method of any of claims 1 and 3, further **characterized in that** the exchange code is encrypted.

5. The method of claim 4, further **characterized by** the point of sale exchange machine company server decrypting the data contained in the encrypted exchange code.

6. The method of any of claims 1-5, further **characterized in that** entering the exchange code into the app comprises scanning the exchange code using a camera of the mobile computing device.

7. The method of any of claims 1-5, further **characterized by** entering the exchange code into the app using a keyboard of the mobile computing device.

8. The method of any of claims 1-7, further **characterized in that** after entering the exchange code into the app, the method further comprises:
prompting the user to confirm that the user wishes to exchange the first type of currency; and
receiving confirmation from the user that the user wishes to exchange the first type of currency.

9. The method of any of claims 1-8, further **characterized in that** the authorization code must be entered into the point of sale exchange machine within a predetermined period of time in order for the point of sale exchange machine to release the second type of currency to the user.

10. The method of any of claims 1-9, further **characterized in that** the authorization code is a one-time use code or biometric data of the user.

11. The method of any of claims 1-9, further **characterized in that** the authorization code is an alphanumeric code or a one-dimensional or two-dimensional bar code scanned by a camera of the point of sale exchange machine.

12. The method of any of claims 1-11, further **characterized in that** the point of sale exchange machine determining that the authorization code is approved comprises comparing the authorization code to codes contained in a database of the point of sale exchange machine, and approving the authorization code when the authorization code matches a code of the codes contained in the database.

13. The method of any of claims 1-12, further **characterized in that** the second type of currency is at least one of cash money, one or more tokens, and one or more products.

14. The method of any of claims 1-13, wherein point of sale exchange machine does not have internet access and the mobile computing device does have internet access.

15. A device **characterized by** being configured to execute to method of any of claims 1-14.
